# EUROPEAN PATENT SPECIFICATION

(11) **EP 0 338 584 B1**
(45) Date of publication and mention of the grant of the patent: **21.07.1993**
(21) Application number: 89107252.2
(22) Date of filing: 21.04.1989
(51) Int. Cl.: B60G 17/04, B60K 5/12

(54) **Active vibration damper, in particular for connecting an engine to a vehicle body**
Aktiver Schwingungsdämpfer, insbesondere zur Verbindung eines Motors mit der Karosserie
Amortisseur actif en particulier pour relier un moteur au chassis d'un véhicule

(30) Priority: 22.04.1988 IT 6737488
(43) Date of publication of application: 25.10.1989
(73) Proprietor: FIAT AUTO S.p.A., 10135 Torino (IT)
(72) Inventor: Titolo, Andrea, I-10100 Torino (IT); Maggioni, Virginio, I-10090 Rosta (IT)
(74) Representative: Jorio, Paolo

(56) References cited:
- DE-A- 2 411 797
- FR-A- 1 243 693
- US-A- 2 756 046
- US-A- 2 991 068
- US-A- 3 128 089
- US-A- 3 142 230
- US-A- 3 275 314
- US-A- 3 282 542

## Description

The present invention relates to an active vibration damper, particularly suitable for interposing as a connection element between a vehicle body and its power unit to prevent vibration produced by the engine being transmitted to the vehicle body.

In automobiles with high-power engines such as grand touring automobiles, the engine is fixed to the vehicle body not only at the floor but also at other points such as at the upper cross-member. As the engine vibrates strongly when in use, ie undergoes small rapid random movements relative to the vehicle body, it is necessary to use devices for connecting the engine to the body which on the one hand are able to allow these movements to take place so as not to induce stresses in the body, and on the other hand are able to rapidly damp vibrations so as to prevent triggering of possible resonance phenomena and/or to prevent or reduce their transmission to the vehicle body, which would cause discomfort to the vehicle users.

For this purpose, known vehicles use passive devices consisting of hangers provided with elastomer bearings, but the results obtainable with such devices are not completely satisfactory. In this respect, although they limit the transmission of stresses to the vehicle body and the triggering of resonance phenomena, vibration transmission to the vehicle body remains too high to provide proper comfort for the user, even though the transmitted vibration is damped in terms of amplitude and frequency.

It is also known, from US-A-3142230, an hydraulic device (applied in excavators) able to operate, in specific conditions, as a damper able to damp relative movements between two members (the rod of the actuator of the arm and the body of the actuator), which is, however,of complex construction and poor operation.

An object of the invention is to provide a damper device which is able to connect two mechanical members together in such a manner as to allow them to undergo relative movement, has high vibration damping capacity and is able to connect an engine to a vehicle body so as to ensure considerable comfort for the vehicle users.

A further object of the invention is to provide a damper device of the active rather than the known passive type, which is able to use a form of energy already commonly present on vehicles, such as hydraulic energy.

Said object is attained according to the invention by an active vibration damper as defined in claim 1 The invention will be more apparent from the non-limiting description of one embodiment thereof given hereinafter with reference to the accompanying drawings in which:
Figures 1 and 2 are diagrammatic views of a vehicle provided with the damper according to the invention;
Figure 3 is a longitudinal sectional elevation of the damper according to the invention; and
Figures 4 and 5 show two different working positions of the damper of Figure 3.

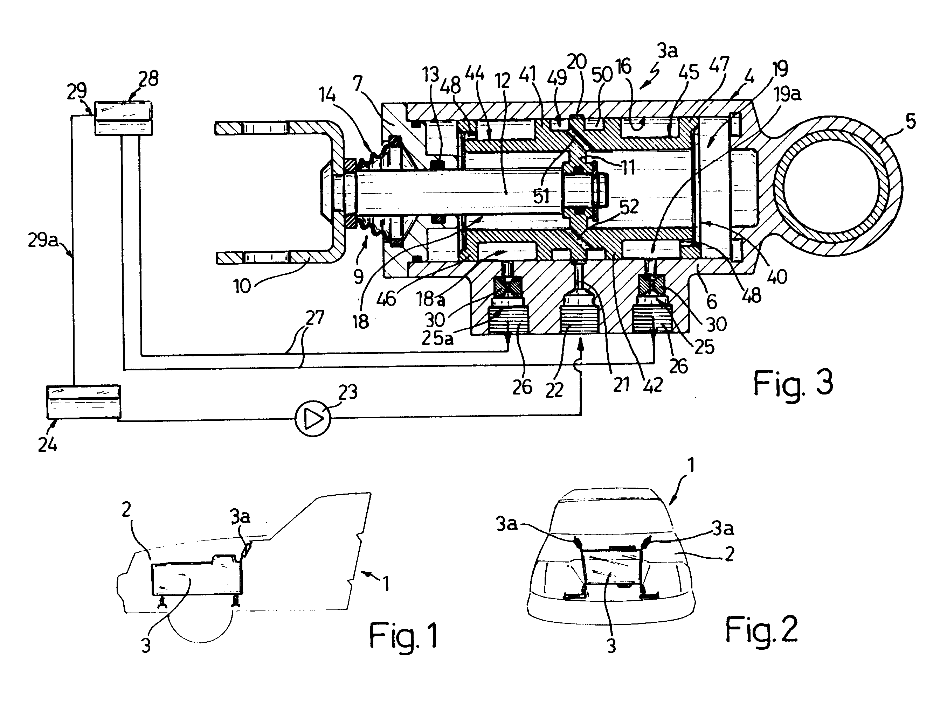

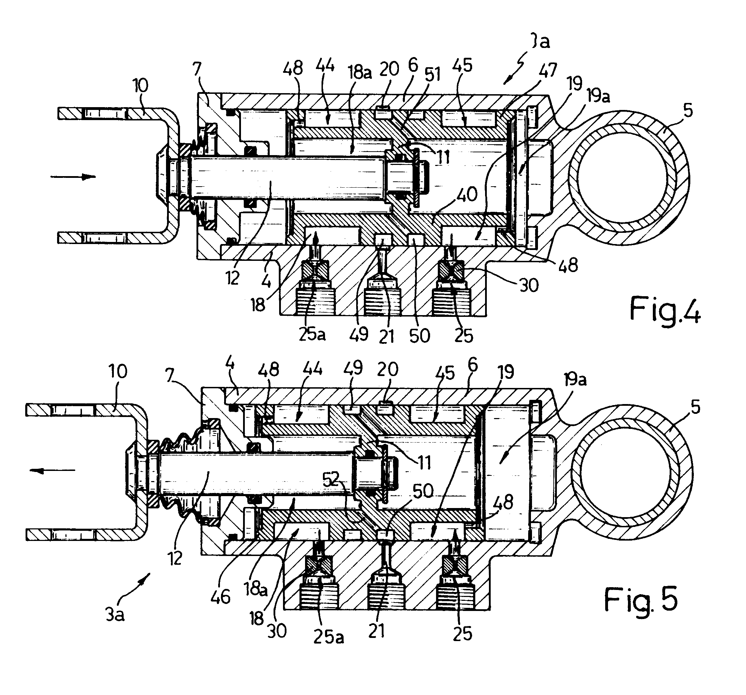

In Figures 1 to 3, the reference numeral 1 indicates a vehicle which in this case is an automobile, comprising a known body 2 and engine 3 which are connected together in such a inner as to be able to undergo small relative movements by one or more active dampers 3a, and in this particular case by two dampers 3a which secure the engine 3 to the front upper part of the body 2. In Figure 3 a damper 3a is shown in section in its rest position, whereas in Figures 4 and 5 the same damper is shown in two opposite working positions. With reference to these latter figures, the damper 3a comprises a first element 4 to be rigidly fixed to the vehicle body 2 in known manner by a ring 5, the element 4 consisting of a hollow cylinder composed of an elongated cylindrical body 6 and a cover 7 and being closed in a fluid-tight manner and filled with an incompressible pressurised fluid such as oil, and a second element 9 to be rigidly fixed to the engine 3 in known manner, such as by a fork 10, and consisting of a piston 11 housed slidably in a fluid-tight inner in the cylinder 4 and a rod 12 mounted slidably in a fluid-tight manner through the cover 7 by way of a gasket 13 and a protection bellows 14 and connected rigidly at one end to the piston 11 and at its other end to the fork 10. The piston 11 slidably engages the inner cylindrical surface 16 of the cylinder 6 and divides its interior into two chambers 18 and 19, the volume of which varies in accordance with the axial position of the piston 11 in the cylinder 6, in that the chambers 18 and 19 are located on opposite sides of the piston 11.

When this latter moves towards the cover 7, the chamber 18 which is traversed centrally and axially over its entire length by the rod 12 reduces in volume whereas the chamber 19 increases in volume by a proportional amount. In contrast, when the piston 11 moves towards the ring 5, the volume of the chamber 19 reduces and that of the chamber 18 increases proportionally, because of the variation in the axial length of the chambers 18 and 19 induced by the variation in the axial position of the piston 11.

When at rest, ie when there are no vibrations to absorb, the piston 11 is positioned in the middle of the cylinder 6, and closes in a fluid-tight manner an annular port 20, also formed substantially in the middle of the cylinder 6, into which there opens a feed bore 21 which is connected, for example by means of a threaded connector 22, to a source of pressurised fluid normally present on the vehicle 1, such as the delivery side of the pump 23 of the lubrication system for the vehicle 1, which draws oil at atmospheric pressure from a tank 24 and pressurises it to a predetermined level. The bore 21 and its connector 22 are formed through the body 6 of the cylinder 4 in an axial position intermediate, with respect to the longitudinal axis of symmetry of the cylinder 6, between two sized discharge ports 25 and 25a connected to the chamber 19 and 18 respectively, and connected by way of respective threaded connectors 26 and pipes 27 to a buffer vessel 28 filled with oil and disposed at a higher level than the cylinder 6 so that the discharge ports 25 are below the level of the oil contained in the vessel 28. This latter is connected to the tank 24 for example via an overflow connection 29 and a discharge pipe 29a, or by any known discharge device, for example controlled by a float, so as to maintain in the vessel 28 a predetermined minimum oil level such that the pipes 27 are never open to atmospheric air. If the connectors 26 are facing upwards the vessel 28 can be in any position. In such a case it can also be dispensed with and be replaced by a simple pipe acting as a syphon. Preferably the discharge ports 25 and 25a are formed through the body 6 of the cylinder 4 in a radial position corresponding to but on opposite sides of the bore 21, and are defined by drilled plugs 30 of known type.

According to the invention, the chambers 18 and 19 can be connected selectively, depending on the axial position of the piston 11, to the port 20 and consequently to the bore 21 and said source of pressurised incompressible fluid, in this case the oil pump 23, so that the fluid which enters them under the thrust of the pump 23 opposes the motion of the piston 11 and tends to return this latter into its central position. A slide valve 40 rigid with the piston 11 is axially slidable within the cylinder 4 in correspondence with the discharge ports 25 and 25a and bore 21.

The slide valve 40 is defined by a pair of sleeve-shaped annular appendices 41 and 42 formed integrally with the piston 11 and projecting axially from opposite ends thereof into the chambers 18 and 19, and comprises a first pair of annular grooves 44 and 45 disposed side by side symmetrically about the piston 11, each being formed on corresponding opposite ends 46 and 47 of the appendices 41 and 42, namely the groove 44 on the appendix 41 and the groove 45 on the appendix 42. The grooves 44 and 45 are in permanent communication with the respective chambers 18 and 19 through respective axial holes 48 provided though the ends 46 and 47 and define respective small-volume chambers 18a and 19a of such an axial width as to be always connected to the discharge ports 25 and 25A, and thus permanently connect these latter to the chambers 18 and 19. In the appendices 41 and 42 there are also respectively provided a third annular groove 49 and a fourth annular groove 50, of a smaller axial width than the grooves 44 and 45, and disposed side-by-side between these latter symmetrically about the piston 11 but closer thereto than the grooves 44 and 45. The groove 49 is therefore provided on the same side of the piston 11 as the groove 44, ie on the appendix 41, and according to the invention is permanently connected to the chamber 19 by a first oblique radial bore 51 formed through the piston 11. Likewise, the groove 50 is provided on the same side of the piston 11 as the groove 45, ie on the appendix 42, and is permanently connected to the chamber 18 by a second oblique radial bore 52 formed through the piston 11 in a position diametrically opposite the bore 51.

When in use, the vibrations to which the engine 3 is subjected consist of small, rapid relative random movements towards and away from the body 2. Consequently, each damper 3a is subjected to an axial force in one of the two directions indicated by the arrows in Figure 4 and 5. With reference to Figure 4, if the relative movement due to the vibration is one of mutual approach of the body and engine, the damper 3a is compressed, ie the rod 12 and piston 11 move axially towards the ring 5. The result of this movement is that as the piston 11 moves away from its central position, it opens the port 20 and consequently pressurised oil enters the cylinder 6 through the bore 21, to pass through the oblique bore 51 and reach the chamber 19. This simultaneously reduces progressively in volume by virtue of being shortened due to the approach of the piston 11 to the end of the body 6, and the excess oil contained in it is expelled through the respective discharge port 25, which is in permanent communication with the chamber 19 through the hole 48 in the end 47 and the groove 45 defining the chamber 19a, and discharges into the vessel 28 and from here into the tank 24. Consequently, the movement of the piston 11 is firstly braked by the hydraulic resistance to oil discharge offered by the drilled plug 30 and then by the new pressurised oil which flows into the chamber 19 to compensate that expelled by the movement of the piston 11. This latter increases the pressure in the chamber 19 to counteract and then exceed the force on the fork 10 and cause reversal of movement of the piston 11 until the rest position of Figure 3 is reattained, with consequent closure of the port 20 and cessation of both oil flow into and from the chamber 19. During these movements of the piston 11 the chamber 18 obviously increases in volume and goes under negative pressure to suck oil through its discharge port 25, for example from the vessel 28.

With reference to Figure 5, when the engine 3 moves away from the body 2, the damper 3a is put under tension and the piston 11 moves towards the cover 7. Consequently the port 20 opens and pressurised oil is fed into the chamber 18 through the bore 52 and simultaneously discharged from it through the hole 48 in the end 46, the groove 44 and the respective drilled plug 30 of the discharge port 25 by the reduction in volume of the chamber 18 resulting from its shortening brought about by the movement of the piston 11. As in the preceding case, this latter is firstly braked and then its movement reversed so that it returns to its rest position of Figure 3. Simultaneously the increase in volume of the chamber 19 causes oil to be drawn into it.

The advantages of the invention are apparent from the aforegoing description. Any movement which vibration induces between the vehicle body 2 and engine 3 is promptly damped and then nullified by the dampers 3a, which thus operate firstly as passive dampers and then as active dampers, by functioning practically as hydraulic actuators. The system is self-adjusting in that any relative movement immediately causes hydraulic connections to be established which are able to damp and then nullify this movement.

Finally, the system is of simple construction and can utilise any hydraulic power source existing on the vehicle.

## Claims

1. An active vibration damper (3a) for mechanically connecting a vehicle engine (3) to a vehicle body (2), said damper (3a) comprising a first (6) and a second (12) element coupled together in a manner axially slidable relative to each other and are each arranged to be rigidly fixed to one of said engine and body (2,3), said damper (3a) being realized as an hydraulic actuator wherein said first element consists of an hollow cylinder (6) closed in a fluid-tight manner and filled with an incompressible pressurized fluid and said second element consists of a rod (12) connected rigid to a piston (11) housed slidably in a fluid-tight manner in said cylinder so as to define therewith a first (18) and a second (19) variable-volume chamber disposed on opposite sides of the piston (11); said hollow cylinder (6) being provided for each said chamber of one discharge port (25,25a) designed to be permanently connected with the interior of the respective chamber irrespective of the axial position of said piston (11), said damper (3a) further comprising valve means (40,21) operated by the axial movement of said piston (11) within said cylinder (6) and designed to selectively connect that of said chambers (18,19) the volume of which is reduced by the axial movement of said piston (11) with a source (23) of pressurized fluid; **characterized** in that said valve means comprise a feed bore (21) for said pressurized fluid, said bore (21) being provided through said cylinder (6) in a position axially intermediate to said discharge ports (25,25a) on the longitudinal axis of symmetry of said cylinder, and a slide valve (40) mounted axially slidable within said cylinder in correspondence with said discharge ports (25,25a) and said feed bore (21), said slide valve (40) being carried by said piston (11) so as to be movable therewith.

2. A damper as claimed in claim 1, characterised in that said slide valve is defined by two sleeve-shaped annular appendices (41, 42) projecting axially from opposite ends of said piston (11) into said chambers (18, 19), and comprises a first (44) and a second (45) annular groove disposed side by side symmetrically about said piston, each being formed on corresponding opposite ends (46, 47) of said axial appendices and are in permanent communication respectively with said first and second chamber (18, 19) and with said sized discharge ports (25, 25A), and a third (49) fourth (50) annular groove disposed side-by-side between said first and second groove in a position axially symmetrical about said piston, said third groove (49) being provided on the same side of said piston as said first groove (44), and being permanently connected to said second chamber (19), and said fourth groove (50) being provided on the same side of said piston as said second groove (45), and being permanently connected to said first chamber (18).

3. A damper as claimed in claim 2, characterised in that said third and fourth groove are permanently connected to said second and first variable-volume chamber by respective oblique radial bores (51) provided through said piston (11).

4. A damper as claimed in claim 2 or 3, characterised in that said feed bore (21) opens into an annular port (20) provided in the inner surface (16) of said cylinder, substantially in correspondence with the middle of this latter.

5. A damper as claimed in one of claims 2 to 4, characterised in that said first and second groove define respective chambers (18a, 19a) which communicate with said first and second chamber (18, 19) by respective axial boles (48) formed through said ends (46, 47) of said annular appendices of the slide valve.

6. A damper as claimed in any one of the preceding claims, characterised in that said sized discharge ports (25, 25a) are both connected to a buffer vessel (28) which is connected to a discharge pipe (29a) for said fluid.

## Patentansprüche

1. Eine aktive Schwingungsdämpfungseinrichtung (3a) zur mechanischen Verbindung eines Fahrzeugmotors (3) mit einer Fahrzeugkarosserie (2), wobei die Dämpfungseinrichtung (3a) ein erstes (6) und ein zweites (12) Element aufweist, die so miteinander verbunden sind, daß sie relativ zueinander axial verschiebbar sind, und so angeordnet sind, daß sie entweder am Motor oder an der Karosserie (2, 3) starr befestigt sind, wobei die Dämpfungseinrichtung (3a) als hydraulisches Betätigungselement verwirklicht ist, in dem das erste Element aus einem fluiddicht verschlossenen Zylinder (6) besteht und mit einem inkompressiblen, mit Druck beaufschlagten Fluid gefüllt ist und in dem das zweite Element aus einer Stange (12) besteht, die mit einem Kolben (11) starr verbunden ist, der auf fluiddichte Weise in dem Zylinder verschiebbar untergebracht ist, um so mit diesem auf gegenüberliegenden Seiten des Kolbens (11) eine erste (18) und eine zweite (19) Kammer mit veränderlichem Volumen zu definieren; wobei der Hohlzylinder (6) für jede Kammer mit einem Entlastungskanal (25, 25a) versehen ist, der so beschaffen ist, daß er unabhängig von der axialen Position des Kolbens (11) mit dem Innenraum der entsprechenden Kammer ständig verbunden ist, wobei die Dämpfungseinrichtung (3a) ferner eine Ventileinrichtung (40, 21) aufweist, die durch die axiale Bewegung des Kolbens (11) im Zylinder (6) betätigt wird und so beschaffen ist, daß sie wahlweise diejenige Kammer (18, 19), deren Volumen durch die axiale Bewegung des Kolbens (11) verkleinert wird, mit einer Quelle (23) des mit Druck beaufschlagten Fluids verbindet; **dadurch gekennzeichnet,** daß die Ventileinrichtung versehen ist mit einer Beschickungsbohrung (21) für das mit Druck beaufschlagte Fluid, wobei die Bohrung (21) im Zylinder (6) an einer Position vorgesehen ist, die sich in axialer Richtung, bezogen auf die Symmetrie-Längsachse des Zylinders, zwischen den Entlastungskanälen (25, 25a) befindet, und einem Schiebeventil (40), das axial verschiebbar im Zylinder in Entsprechung mit den Entlastungskanälen (25, 25a) und der Beschickungsbohrung (21) angebracht ist, wobei das Schiebeventil (40) vom Kolben (11) gehalten wird, so daß es mit diesem beweglich ist.

2. Eine Dämpfungseinrichtung gemäß Anspruch 1, dadurch gekennzeichnet, daß das Schiebeventil durch zwei buchsenförmige, ringförmige Ansätze (41, 42) definiert ist, die an entgegengesetzten Enden des Kolbens (11) in die Kammern (18, 19) vorstehen, und versehen ist mit einer ersten (44) und einer zweiten (45) ringförmigen Rille, die nebeneinander symmetrisch um den Kolben angeordnet sind, wobei jede von ihnen am entsprechenden der entgegengesetzten Enden (46, 47) der axialen Ansätze gebildet und mit der ersten bzw. der zweiten Kammer (18, 19) und mit den genau bemessenen Entlastungskanälen (25, 25A) ständig in Verbindung sind, und einer dritten (49) und einer vierten (50) ringförmigen Rille, die nebeneinander zwischen der ersten und der zweiten Rille um den Kolben an axial symmetrischen Positionen angeordnet sind, wobei die dritte Rille (49) auf derselben Seite des Kolbens wie die erste Rille (44) vorgesehen und mit der zweiten Kammer (19) ständig verbunden ist und wobei die vierte Rille (50) auf derselben Seite des Kolbens wie die zweite Rille (45) vorgesehen und mit der ersten Kammer (18) ständig verbunden ist.

3. Eine Dämpfungseinrichtung gemäß Anspruch 2, dadurch gekennzeichnet, daß die dritte und die vierte Rille jeweils durch im Kolben (11) vorgesehene, schräge Radialbohrungen (51) mit der zweiten bzw. mit der ersten Kammer mit veränderlichem Volumen ständig verbunden sind.

4. Eine Dämpfungseinrichtung gemäß Anspruch 2 oder 3, dadurch gekennzeichnet, daß die Beschickungsbohrung (21) in einen ringförmigen Kanal (20) mündet, der an der Innenseite (16) des Zylinders im wesentlichen in der Mitte des letzteren vorgesehen ist.

5. Eine Dämpfungseinrichtung gemäß einem der Ansprüche 2 bis 4, dadurch gekennzeichnet, daß die erste und die zweite Rille jeweils eine Kammer (18a, 19a) definieren, die mit der ersten bzw. mit der zweiten Kammer (18, 19) durch entsprechende axiale Bohrungen (48) verbunden sind, die in den Enden (46, 47) der ringförmigen Ansätze des Schiebeventils ausgebildet sind.

6. Eine Dämpfungseinrichtung gemäß einem der vorangehenden Ansprüche, dadurch gekennzeichnet, daß die beiden genau bemessenen Entlastungkanäle (25, 25a) mit einem Zwischenspeicherbehälter (28) verbunden sind, der mit einem Fluid-Entlastungsrohr (29a) verbunden ist.

## Revendications

1. Amortisseur actif de vibrations (3a) pour relier mécaniquement un moteur de véhicule (3) à un châssis de véhicule (2), ledit amortisseur (3a) comprenant un premier (6) et un deuxième (12) éléments mutuellement associés de manière à coulisser axialement l'un par rapport à l'autre et prévus chacun pour être rigidement fixés à l'un desdits moteur et châssis (2,3), ledit amortisseur (3a) étant réalisé sous la forme d'un actionneur hydraulique dans lequel ledit premier élément est constitué d'un cylindre creux (6) fermé de manière étanche aux fluides et rempli d'un fluide pressurisé incompressible et ledit deuxième élément est constitué d'une tige (12) fixée rigidement à un piston (11) logé de façon coulissante et étanche aux fluides dans ledit cylindre afin de définir avec celui-ci une première (18) et une deuxième (19) chambres de volume variable situées sur les côtés opposés du piston (11) ; ledit cylindre creux (6) comportant,pour chaque dite chambre, un orifice calibré de décharge (25, 25a) disposé de manière à communiquer en permanence avec l'intérieur de la chambre respective quelle que soit la position axiale dudit piston (11), ledit amortisseur (3a) comprenant en outre des moyens de distribution (40, 21) actionnés par le mouvement axial dudit piston (11) dans ledit cylindre (6) et conçus pour connecter sélectivement celle desdites chambres (18,19) dont le volume est réduit par le mouvement axial dudit piston (11) avec une source (23) de fluide sous pression; caractérisé en ce que lesdits moyens de distribution comprennent un passage d'alimentation (21) pour ledit fluide sous pression, ledit passage (21) étant ménagé à travers ledit cylindre (6) à une position située axialement entre lesdits orifices de décharge (25,25a) sur l'axe longitudinal de symétrie dudit cylindre, et un tiroir de distribution (40) monté de façon axialement coulissante dans ledit cylindre en correspondance desdits orifices de décharge (25,25a) et dudit passage d'alimentation (21), ledit tiroir de distribution (40) étant porté par ledit piston (11) de manière à se déplacer avec lui.

2. Amortisseur suivant la revendication 1, caractérisé en ce que ledit tiroir de distribution est défini par deux appendices annulaires en forme de manchon (41,42) s'étendant dans la direction axiale à partir des extrémités opposées dudit piston (11) et pénétrant dans lesdites chambres (18,19), et il comprend une première (44) et une deuxième (45) gorges annulaires disposées côte à côte symétriquement audit piston, chaque gorge étant ménagée dans des extrémités opposées correspondantes (46,47) desdits appendices axiaux et étant en communication permanente respectivement avec ladite première et ladite deuxième chambres (18,19) et avec lesdits orifices calibrés de décharge (25,25a), et une troisième (49) et quatrième (50) gorges annulaires disposées côte à côte entre lesdites première et deuxième gorges dans une position axialement symétrique par rapport audit piston, ladite troisième gorge (49) étant prévue du même côté dudit piston que la dite première gorge (44) et communiquant en permanence avec ladite deuxième chambre (19), et ladite quatrième gorge (50) étant prévue du même côté dudit piston que ladite deuxième gorge (45) et communiquant en permanence avec ladite première chambre (18).

3. Amortisseur suivant la revendication 2, caractérisé en ce que lesdites troisième et quatrième gorges sont reliées de façon permanente auxdites deuxième et première chambres de volume variable par des trous radiaux obliques respectifs (51) ménagés à travers ledit piston (11).

4. Amortisseur suivant la revendication 2 ou 3, caractérisé en ce que ledit passage d'alimentation (21) débouche dans une rainure annulaire (20) prévue dans la surface intérieure (16) dudit cylindre, sensiblement en correspondance du milieu de ce dernier.

5. Amortisseur suivant une quelconque des revendications 2 à 4, caractérisé en ce que lesdites première et deuxième gorges définissent des chambres respectives (18a,19a) qui communiquent avec lesdites première et deuxième chambres (18,19) par des trous axiaux respectifs (48) ménagés à travers lesdites extrémités (46, 47) desdits appendices annulaires du tiroir de distribution.

6. Amortisseur suivant une quelconque des revendications précédentes, caractérisé en ce que les dits orifices calibrés de décharge (25,25a) sont tous deux reliés à un réservoir en tampon (28) qui est raccordé à un tuyau d'évacuation (29a) dudit fluide.
